# EUROPEAN PATENT SPECIFICATION

(11) **EP 2 177 258 B1**
(45) Date of publication and mention of the grant of the patent: **20.04.2016**
(21) Application number: 09172331.2
(22) Date of filing: 06.10.2009
(51) Int. Cl.: B01D 53/94, B01J 23/63, B01J 35/00, B01J 37/03, B01J 37/02, B01J 23/00, B01J 35/10, F01N 3/08

(54) **Exhaust gas purification catalyst**
Abgasreinigungskatalysator
Catalyseur de purification des gaz d'échappement

(30) Priority: 17.10.2008 JP 2008269016; 17.10.2008 JP 2008269018
(43) Date of publication of application: 21.04.2010
(73) Proprietor: Mazda Motor Corporation, Aki-gun, Hiroshima 730-8670 (JP)
(72) Inventor: Suzuki, Kenji, Aichi 485-0829 (JP); Yamada, Hiroshi, Hiroshima 730-8670 (JP); Miyoshi, Seiji, Hiroshima 730-8670 (JP); Mineoi, Susumu, Hiroshima 730-8670 (JP)
(74) Representative: Zinnecker, Armin

(56) References cited:
- EP-A- 1 046 423
- EP-A- 1 127 605
- EP-A- 1 340 537
- EP-A- 1 685 891
- WO-A-98/42437
- US-A1- 2005 124 489

## Description

### BACKGROUND

Exhaust gas from diesel engines and lean-burn gasoline engines contains a relatively large amount of nitrogen oxide (NOx). To purify this NOx, so-called lean NOx trap catalysts are used. Such a lean NOx trap catalyst stores NOx in an oxygen-rich atmosphere (i.e., when the air-fuel ratio of exhaust gas is lean), and releases the stored NOx when the oxygen concentration in an atmosphere becomes low (i.e., when the air-fuel ratio of the exhaust gas comes close to the stoichiometric air-fuel ratio or becomes richer than the stoichiometric air-fuel ratio), thereby performing reduction purification with a reducing agent such as hydrocarbon (HC) in the exhaust gas.

The lean NOx trap catalyst is generally made of a mixture of a catalytic metal such as Pt or Rh, a NOx storage material of an alkali metal, an alkali earth metal, or a rare earth metal, and an oxygen storage material of a Ce-based oxide. In this catalyst, the oxygen storage material functions to promote NOx storage by the NOx storage material.

Specifically, the oxygen storage material stores oxygen in an oxygen-rich atmosphere, and releases the oxygen as active oxygen when the oxygen concentration in the atmosphere decreases. This active oxygen promotes oxidation of HC and CO by the catalytic metal. Heat of this catalytic reaction causes the temperature of the NOx storage material to increase, thereby increasing the NOx storage capacity of the NOx storage material. In an oxygen-rich atmosphere, the oxygen storage material also performs oxygen exchange, i.e., takes oxygen in exhaust gas and exchanges the oxygen with oxygen in the oxygen storage material by the valence change of Ce ions. Active oxygen released by this oxygen exchange contributes to conversion from NO in the exhaust gas to NO₂ which is easily stored in the NOx storage material.

Known oxygen storage materials are, for example, a CeZr-based mixed oxide and a CePr-based mixed oxide. Specifically, Japanese Laid-Open Patent Publication No. 2004-267843 discloses a lean NOx catalyst intended for an ignition-type engine and containing a CeZrSr mixed oxide. Japanese Laid-Open Patent Publication No. 2003-245552 discloses a lean NOx trap catalyst containing a CePr mixed oxide.

Mixed oxide particles formed by dissolving a catalytic metal in a Ce-based oxide are also currently used as an oxygen storage material. A catalytic metal dissolved in a Ce-based oxide is less likely to be agglomerated and sintered, and has a higher oxygen storage/release capacity, than a catalytic metal supported on the surfaces of Ce-based oxide particles. For example, Japanese Laid-Open Patent Publication No. 2004-174490 discloses a CeZrNd mixed oxide in which a catalytic metal Rh is dissolved. Japanese Laid-Open Patent Publication No. 10-182155 discloses a CeZrAl mixed oxide in which a catalytic metal Pd or Pt is dissolved. Such CeZr-based mixed oxides have higher thermal resistances than CeO₂ that is also known as an oxygen storage material. However, these high thermal resistances are considered to be obtained owing to the function of Zr. It is also considered that Zr increases oxygen deficiency which contributes to oxygen storage/release.

Japanese Laid-Open Patent Publication No. 50-73893 discloses a CePr mixed oxide containing, as a component for separating oxygen from air, a small amount of at least one surface dopant selected from the group consisting of V, Mn, Cu, Mo, W, Pt, Tl, Pb, and Bi. It should be noted that the surface dopant proposed in an embodiment in this publication is Ag, and there are no embodiments suggesting the use of other metals such as Pt as dopants. Moreover, the publication discloses neither the oxygen storage/release capacity of the CePr mixed oxide, nor the use of the CePr mixed oxide for exhaust gas purification.

US 2005/124489 A1 and EP-A-1 127 605 disclose exhaust gas purification catalysts according to the preamble part of claim 1.

EP 1 340 537 A discloses an exhaust gas purification catalyst according to the preamble part of claim 1.

EP 1 685 891 A discloses an exhaust gas catalyst supported on a monolithic substrate, comprising an oxide mixture having substantially equal molar content of praseodymium and cerium, about 0 - 10 wt % zirconium, about 0 - 10 wt % yttrium, and about 0 - 2 wt % precious metal.

### SUMMARY

Exhaust gas from a diesel engine or a lean-burn gasoline engine is at a low temperature from about 250°C to about 400°C during steady state operation, and is required of having a high NOx purification efficiency even in such a low-temperature range. It is also required to enhance the NOx purification efficiency at lower exhaust-gas temperatures in a period of time from startup of the engine to the steady state operation. In addition, in a case where a hybrid vehicle including an engine and a motor as power sources employs a diesel engine, this engine is expected to be frequently switched between operation and stopping, resulting in that the exhaust-gas temperature decreases to 250°C or less. If this hybrid vehicle uses a mixed fuel in which alcohol is added to light oil, the exhaust-gas temperature is expected to become lower.

It is therefore an object of the present invention to enhance the NOx purification performance of a catalyst at low exhaust-gas temperatures.

To achieve the object, according to the present invention, an exhaust gas purification catalyst is provided, comprising the features of claim 1. Advantageous embodiments are shown in the subclaims.

The exhaust gas purification catalyst is produced by using a CePr-based mixed oxide (composite oxide) in which a catalytic metal is dissolved.

In an aspect of the present invention, an exhaust gas purification catalyst includes a support and a catalytic layer provided on the support. This catalytic layer contains: a NOx storage material which stores NOx in exhaust gas when an air-fuel ratio of the exhaust gas is leaner than a stoichiometric air-fuel ratio, and releases the NOx when the air-fuel ratio is close to the stoichiometric air-fuel ratio or richer than the stoichiometric air-fuel ratio; and CePr-based mixed oxide particles doped with a catalytic metal and formed by complexing at least Ce and Pr. In this catalyst, the CePr-based mixed oxide particles contain a Ce oxide and a Pr oxide which are at least partially dissolved in each other, and the catalytic metal is dissolved in the CePr-based mixed oxide particles.

In these CePr-based mixed oxide particles, the combination of Ce and Pr as metal components allows a high oxygen storage/release capacity to be obtained. In addition, the catalytic metal dissolved in the CePr-based mixed oxide promotes storage and release of oxygen in/from these particles, thereby also allowing a high oxygen storage/release capacity to be obtained at low temperatures. The CePr-based mixed oxide particles adsorb NOx contained in the exhaust gas.

Accordingly, even at low exhaust-gas temperatures, in an oxygen-rich atmosphere having a high oxygen concentration (i.e., when the air-fuel ratio of the exhaust gas is leaner than the stoichiometric air-fuel ratio), the CePr-based mixed oxide particles release active oxygen through the aforementioned oxygen exchange to convert NO contained in the exhaust gas to NO₂, thereby increasing the NOx storage capacity of the NOx storage material. On the other hand, when the oxygen concentration in the exhaust gas becomes low (i.e., when the oxygen concentration comes close to the stoichiometric air-fuel ratio or becomes richer than the stoichiometric air-fuel ratio), active oxygen released from she CePr-based mixed oxide particles promotes oxidation of HC and CO in the exhaust gas. Accordingly, the catalyst temperature, i.e., the temperature of the NOx storage material, increases, thereby increasing the NOx storage/release capacity. In addition, since the CePr-based mixed oxide particles adsorb NOx in the exhaust gas, it is possible to suppress a discharge of unpurified NOx in the exhaust gas at low exhaust-gas temperatures.

The NOx storage material may be made of at least one material selected from the group consisting of an alkali metal, an alkali earth metal, and a rare earth metal.

Part of the catalytic metal dissolved in the CePr-based mixed oxide particles is preferably dispersed and exposed at surfaces of the mixed oxide particles. In this case, the oxygen storage/release capacity of the mixed oxide particles can be increased. In addition, oxidation of HC and CO in the exhaust gas caused by the mixed oxide particles and oxidation of NO into NO₂ are promoted.

In a preferred embodiment, the part of the catalytic metal dispersed and exposed at the surfaces of the CePr-based mixed oxide particles has a grain diameter of 3 nm or less when observed with an electron microscope after heating at 1000°C for 24 hours in an atmospheric environment. This means that even if the catalytic metal is sintered at the surfaces of the particles, the degree of this sintering is small, and therefore, oxygen storage/release or purification of the exhaust gas does not deteriorate significantly.

In a surface region of the CePr-based mixed oxide particles extending from the surfaces thereof to a depth of 2 nm, the catalytic metal preferably has a concentration equal to or less than 2.5 times as high as an average concentration of the catalytic metal in the entire mixed oxide particles. This surface catalytic metal concentration ratio is more preferably less than 2.0 times, much more preferably equal to or less than 1.8 times, and still more preferably equal to or less than 1.5 times, as high as an average concentration.

Specifically, in conventional mixed oxide particles, a large part of a catalytic metal is in the form of an oxide, and is carried on the surfaces of the particles. Thus, the catalytic metal concentration in the particle surface is high. Such a catalytic metal carried as an oxide is coupled to, for example, Ce through oxygen in an oxygen-rich atmosphere. However, when the oxygen concentration in the atmosphere becomes low, the bonding is considered to be broken so that the catalytic metal is easily agglomerated or sintered. Accordingly, when such a mixed oxide is exposed to high-temperature exhaust gas, the catalytic metal on the particle surfaces is sintered, thereby causing the oxygen storage/release capacity or exhaust gas purification performance of the mixed oxide to significantly deteriorate.

On the other hand, according to the present invention, part of the catalytic metal concentration in the particle surfaces is reduced to a value equal to or less than 2.5 times as high as the average concentration of the entire particles, as described above. This means that a small amount of a catalytic metal is carried, in the form of an oxide, on the particle surfaces, i.e., a large part of the catalytic metal is dissolved in the mixed oxide particles. Accordingly, even when the mixed oxide particles are exposed to high-temperature exhaust gas, the catalytic metal is not likely to be agglomerated and sintered, or even if the catalytic metal is agglomerated and sintered, the degree of this sintering is small. In other words, even when part of the catalytic metal at the particle surface is sintered, active sites effective for the oxygen storage/release capacity or exhaust gas purification do not greatly decrease. Moreover, dissolving of the catalytic metal suppresses sintering of the mixed oxide particles themselves. Accordingly, even when the mixed oxide particles are exposed to high-temperature exhaust gas, the pore volume can be kept large, thus maintaining a high gas diffusivity.

According to the invention, the catalytic metal dissolved in the CePr-based mixed oxide particles is Pt. Preferably the catalytic layer further carries Pt as a result of impregnation with a Pt solution, in addition to Pt dissolved in the CePr-based mixed oxide particles.

In this manner, Pt carried on the CePr-based mixed oxide particles as a result of impregnation contributes to conversion of NO in the exhaust gas to NO₂ which is easily stored in the NOx storage material, and also contributes to an increases in the catalyst temperature, i.e., the temperature of the NOx storage material, through oxidation purification of HC and CO contained in the exhaust gas, and thereby to an increase in the NOx storage capacity of the NOx storage material. These functions of Pt are advantageous in increasing the NOx purification performance.

A proportion of the amount of Pt dissolved in the CePr-based mixed oxide particles with respect to a sum of the amount of Pt dissolved in the CePr-based mixed oxide particles and the amount of Pt carried on the catalytic layer as a result of impregnation is preferably in the range from 20% by mass to 60% by mass, both inclusive. This proportion is hereinafter referred to as a "doping proportion."

That is, an experiment shows that the NOx purification efficiency varies with the doping proportion. The NOx purification efficiency is high when the doping proportion is in the range from 20% by mass to 60% by mass, both inclusive. More preferably, the doping proportion is in the range from 20% by mass to 45% by mass, both inclusive.

A catalytic layer containing oxide particles carrying Rh is preferably provided on or above the catalytic layer containing the NOx storage material and the CePr-based mixed oxide particles.

In this manner, in an oxygen-rich atmosphere having a high oxygen concentration in the exhaust gas, the lower catalytic layer containing the NOx storage material and the CePr-based mixed oxide particles mainly stores NOx, and suppresses release of NOx. When the oxygen concentration in the exhaust gas becomes low, Rh carried on oxide particles in the upper catalytic layer effectively contributes to reduction purification of NOx released from the NOx storage material by using HC and CO in the exhaust gas as reducing agents.

In the lower catalytic layer, the NOx storage material is supported on the CePr-based mixed oxide particles. This causes the CePr-based mixed oxide to contribute to an increase in the NOx storage capacity of the NOx storage material. In a preferred embodiment, the NOx storage material and Rh are carried on the CePr-based mixed oxide particles.

In the lower catalytic layer, the Pr/(Ce+Pr) mole percentage of the CePr-basted mixed oxide particles is preferably 50% or less. Then, the NOx purification performance is enhanced.

The CePr mixed oxide (i.e., a mixed oxide in which Ce, Pr, and the catalytic metal are complexed with each other to form oxide particles, a Ce oxide and a Pr oxide are at least partially dissolved in each other, the catalytic metal is dissolved in the oxide particles, and the dissolved catalytic metal is partially dispersed and exposed at the surfaces of the oxide particles) can be obtained by the following manner. First, an acid source solution containing Ce ions, Pr ions, and a hydroxo complex of the catalytic metal is mixed with a basic solution, thereby precipitating a hydroxide containing the Ce and Pr ions and the catalytic metal. Then, the obtained precipitate is calcined.

More specifically, a dinitrodiammine platinum (II) nitric acid solution, which is conventionally widely used as a catalytic metal source such as a Pt source material, contains an amino group and a nitro group. The amino group has a high affinity for an ammonia solvent, and is likely to form hydrogen bonds of N-H···N. Accordingly, when aqueous ammonia is used as a basic solution for obtaining a hydroxide precipitate, the Pt source material is bonded to the ammonia solvent, and thus a hydroxide precipitate of Pt is not likely to be formed. That is, a large amount of the Pt source material does not become a hydroxide, and is attached to a hydroxide of Ce and Pr, or otherwise, when the hydroxide precipitate is washed, a large amount of the Pt source material is washed out with the ammonia solvent.

On the other hand, in the hydroxo complex used as a catalytic metal source in the aforementioned method, OH groups coordinate to the catalytic metal. Thus, the hydroxo complex is easily bonded to hydroxides of Ce and Pr produced by mixing the source solution and the basic solution. Accordingly, a small amount of the catalytic metal remains in the solvent, thereby obtaining a CePr-based mixed oxide in which the catalytic metal is dissolved at a concentration substantially corresponding to the charge amount. The fact that the hydroxo complex of the catalytic metal is easily bonded to the hydroxides of Ce and Pr means that the catalytic metal is not carried in the form of an oxide on the particle surfaces but is easily dissolved in the CePr-based mixed oxide particles. As a result, the concentration of the catalytic metal in the surface region of the particles can be reduced to a small value equal to or less than 2.5 times as large as, and more preferably less than twice, the average concentration of the catalytic metal in the entire particles.

### BRIEF DESCRIPTION OF THE DRAWINGS

FIG. 1 is a cross-sectional view showing a structure of an exhaust gas purification catalyst according to an embodiment.
FIG. 2 is a TEM photograph of mixed oxide particles according to the embodiment.
FIG. 3 shows a structural formula of hexahydroxo platinum (IV) complex ions.
FIG. 4 shows a structural formula of dinitrodiammine platinum (II).
FIG. 5 is a graph showing surface Pt concentration ratios of respective types of mixed oxide particles.
FIG. 6 is a graph showing how the oxygen storage/release amounts of respective types of mixed oxide powder change with temperature.
FIG. 7 is a graph showing a comparison in the amount of released oxygen between the mixed oxide powder of the embodiment and conventional mixed oxide powder.
FIG. 8 is a graph showing a relationship between the Pr/(Ce+Pr) mole percentage of mixed oxide powder and the amount of released oxygen.
FIG. 9 is a graph showing a relationship between the Pr/(Ce+Pr) mole percentage and the NOx adsorption/desorption capacity of mixed oxide powder.
FIG. 10 is a graph showing a relationship between the Pt doping proportion of the CePr mixed oxide powder and the NOx purification efficiency in the exhaust gas purification catalyst.
FIG. 11 is a graph showing a relationship between the Pr/(Ce+Pr) mole percentage of CePr mixed oxide powder and the NOx purification efficiency in the exhaust gas purification catalyst.

### DETAILED DESCRIPTION

Hereinafter, preferred embodiments of the invention will be described with reference to the drawings. Note that the following description of the preferred embodiments is merely illustrative in nature, and is not intended to limit the scope, applications, and use of the invention.

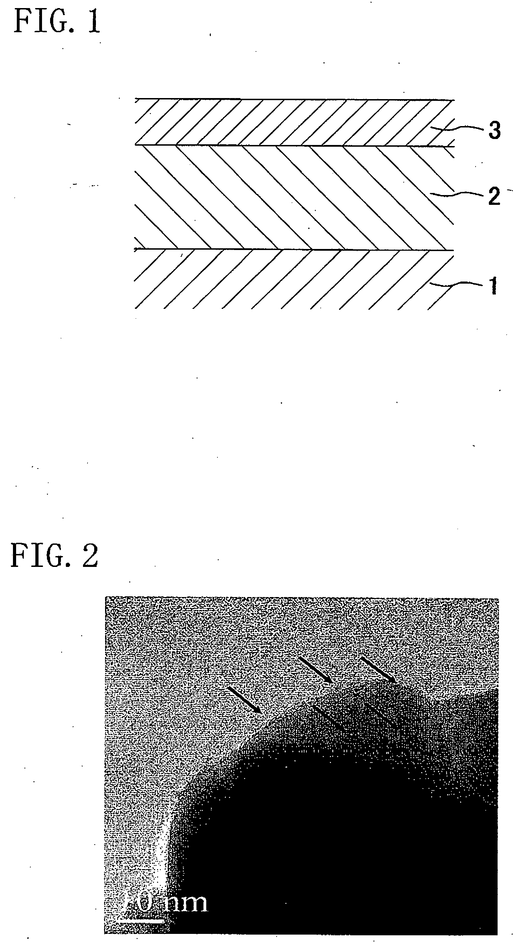

FIG. 1 illustrates a structure of an exhaust gas purification catalyst for purifying exhaust gas from a diesel engine or a lean-burn gasoline engine, and specifically for purifying NOx in the exhaust gas. In FIG. 1, reference character 1 denotes the wall of a cell of a honeycomb support, reference character 2 denotes a lower catalyst layer formed on the cell wall 1, reference character 3 denotes an upper catalyst layer formed on the lower catalyst layer 2. The honeycomb support 1 can be formed of a heat-resistant inorganic material such as cordierite.

Preferably, CePr-based mixed oxide particles doped with Pt as a catalytic metal and activated alumina particles are provided in the lower catalyst layer 2, activated alumina particles carrying Rh as a catalytic metal are provided in the upper catalyst layer 3, and the upper and lower catalyst layers 2 and 3 are impregnated with Pt, Rh, and NOx storage materials to carry these materials. This carrying as a result of impregnation is performed by impregnating the catalyst layers 2 and 3 with a Pt solution, a Rh solution, and a NOx storage material solution and then drying and calcining these layers. Accordingly, each of the Pt, Rh, and NOx storage materials after the impregnation is at least partially supported on at least part of the CePr-based mixed oxide particles in the lower catalyst layer 2. As the NOx storage material, an alkali metal, an alkali earth metal, or a rare earth metal may be used, and in particular, an alkali earth metal such as Ba or Sr is preferably used.

In this case, in an oxygen-rich atmosphere, Pt supported on activated alumina in the lower catalyst layer 2 converts NO in the exhaust gas to NO₂ which is easily stored in the NOx storage material. The Pt-doped CePr-based mixed oxide powder stores oxygen in an oxygen-rich atmosphere, and releases the stored oxygen as active oxygen when the oxygen concentration in an atmosphere becomes low. In an oxygen-rich atmosphere, this Pt-doped CePr-based mixed oxide powder also performs oxygen exchange of taking oxygen in the exhaust gas and exchanging the oxygen with oxygen in the mixed oxide particles by the valence change of Ce ions. Active oxygen released by this oxygen exchange contributes to conversion of NO in the exhaust gas to NO₂. When the oxygen concentration in the exhaust gas becomes low, Pt supported on activated alumina causes oxidation of HC and CO in the exhaust gas with the active oxygen released from the mixed oxide powder to increase the catalyst temperature with heat of the reaction, while performing reduction purification of NOx released from the NOx storage material with HC and CO used a reducing agents. Rh supported on activated alumina in the upper catalyst layer 3 effectively acts on the reduction purification of NOx using HC and CO as reducing agents in a state in which the oxygen concentration in an atmosphere is low.

An important feature of the present invention is using CePr-based mixed oxide particles doped with a catalytic metal as a component of an exhaust gas purification catalyst. Hereinafter, features of this exhaust gas purification catalyst, particularly the aforementioned feature, will be described.

### <TEM Photograph of Pt-doped CePr-based Mixed Oxide Particles>

FIG. 2 is a transmission electron microscopy (TEM) photograph of Pt-doped CePr-based mixed oxide particles according to the present invention after heating at 1000°C for 24 hours in an atmospheric environment. These mixed oxide particles are CePr-based mixed oxide particles in which Pt as a catalytic metal is dissolved so as to be located in space in the crystal lattice or between atoms. The compositional formula excluding Pt is Ce_{0.9}Pr_{0.1}O₂. The amount of Pt dissolved in the mixed oxide particles, i.e., the Pt concentration (average concentration) in the entire particles is 0.5% by mass. The arrows in the TEM photograph indicate Pt particles dispersed and exposed at the surfaces of the mixed oxide particles. These Pt particles have diameters of 3 nm or less. The Pt doping amount is preferably in the range from 0.1% by mass to 2.0% by mass, both inclusive.

### <Formation of Pt-doped CePr-based Mixed Oxide Powder>

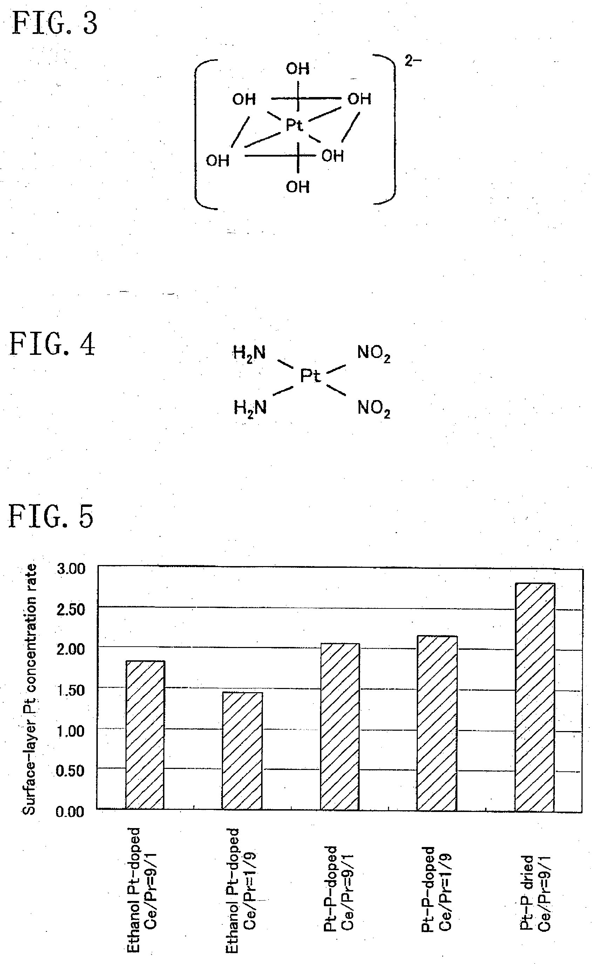

An acid solution containing Ce ions, Pr ions, and a hydroxo complex of Pt is prepared. Cerium nitrate (III) hexahydrate may be used as a Ce source material, praseodymium nitrate (III) hexahydrate may be used as a Pr source material, and a hexahydroxo platinate (IV) ethanolamine solution or a hexahydroxo platinate (IV) nitric acid solution may be used as a Pt source material (i.e., a hydroxo complex). Given amounts of the Ce source material, the Pr source material, and the Pt source material are mixed with water, thereby obtaining a source solution (having acidity). FIG. 3 shows a structure of hexahydroxo platinum (IV) complex ions.

A basic solution is added to, and mixed with, the source solution, thereby producing precipitated particles of a mixed hydroxide of Ce, Pr, and Pt which is a precursor of the mixed oxide particles. In this case, the source solution is stirred at room temperature for about one hour, and then aqueous ammonia at a concentration of about 7% is added as a basic solution to this source solution. Another basic solution, e.g., an aqueous solution of caustic soda, may be used.

The solution containing the precursor precipitated particles is subjected to centrifugation, thereby removing the supernatant liquid. Ion-exchanged water is further added to the dehydrated precipitate obtained by the removal of the supernatant liquid. Then, the resultant precipitate is stirred, and is subjected to centrifugation (i.e., dehydrated) again. This cycle of rinsing and dehydration is repeated the necessary number of times. By repeating the cycle of rinsing and dehydration, the redundant basic solution is removed.

The dehydrated precipitate is dried, then calcined and ground. The drying can be performed by, for example, keeping the dehydrated precipitate in an atmospheric environment at a temperature of about 100°C to about 250°C for a given period of time. The calcining can be performed by, for example, keeping the dehydrated precipitate in the atmospheric environment at a temperature of about 400°C to about 600°C for several hours.

In this manner, mixed oxide particles doped with Pt and formed by complexing at least Ce and Pr are obtained. These mixed particles contain a Ce oxide and a Pr oxide which are at least partially dissolved in each other. In the mixed particles, Pt is dissolved in the mixed oxide particles, and part of the Pt is dispersed and exposed at the surfaces of the oxide particles.

### <Pt Concentration in Surface Layer of Mixed Oxide Particles of Each Type>

Mixed oxide powder of each of EXAMPLES 1 to 4 and COMPARATIVE EXAMPLE 1 was prepared to obtain the ratio of Pt concentration in the surface region with respect to the average concentration of Pt in the entire particles for each example.

### -EXAMPLE 1-

Mixed oxide powder of EXAMPLE 1 was prepared by using a hexahydroxo platinate (IV) ethanolamine solution as a Pt source material with the aforementioned method for forming Pt-doped CePr-based mixed oxide powder. The Ce/Pr mole ratio was 9/1. The amount of the charged Pt source material was adjusted such that the Pt concentration in the entire particles was 0.5% by mass. The obtained mixed oxide powder is referred to as "Ethanol Pt-doped Ce/Pr = 9/1" or "Ethanol Pt-doped Ce_{0.9}Pr_{0.1}O₂" in the drawings and tables.

### -EXAMPLE 2-

Mixed oxide powder of EXAMPLE 2 was prepared under the same conditions in the same manner as those in EXAMPLE 1 except that the Ce/Pr mole ratio was 1/9. The obtained mixed oxide powder is referred to as "Ethanol Pt-doped Ce/Pr = 1/9" or "Ethanol Pt-doped Ce_{0.1}Pr_{0.9}O₂" in the drawings and tables.

### -EXAMPLE 3-

Mixed oxide powder of EXAMPLE 3 was prepared by using a dinitrodiammine platinum (II) nitric acid solution (which is so-called platinum P salt) shown in FIG. 4 as a Pt source material under the same conditions in the same manner as those in EXAMPLE 1. In the case of using a dinitrodiammine platinum (II) nitric acid solution as a Pt source material, even when a basic solution such as ammonia is added, about 80% of the contained Pt component is coprecipitated as Pt hydroxide. Thus, in this example, the amount of the charged Pt source material was set at a value 1.25 times as large as a desired value such that the Pt concentration in the entire particles was 0.5% by mass. The obtained mixed oxide powder is referred to as "Pt-P-doped Ce/Pr = 9/1" or "Pt-P-doped Ce_{0.9}Pr_{0.1}O₂" in the drawings and tables.

### -EXAMPLE 4-

Mixed oxide powder of EXAMPLE 4 was prepared under the same condition in the same manner as those for EXAMPLE 3 except that the Ce/Pr mole ratio was 1/9. The obtained mixed oxide powder is referred to as "Pt-P-doped Ce/Pr = 1/9" or "Pt-P-doped Ce_{0.1}Pr_{0.9}O₂" in the drawings and tables.

### -COMPARATIVE EXAMPLE 1-

CePr mixed oxide powder having a Ce/Pr mole ratio of 9/1 and a dinitrodiammine platinum (II) nitric acid solution were mixed, and evaporated to dryness, thereby preparing mixed oxide powder of COMPARATIVE EXAMPLE 1. The amount of carried Pt was set to be 0.5% by mass of the mixed oxide powder. The obtained mixed oxide powder is referred to as "Pt-P dried Ce/Pr = 9/1" or "Pt-P dried Ce_{0.9}Pr_{0.1}O₂" in the drawings and tables.

### -Measurement of Pt Concentration-

The Pt concentration in the surface region (i.e., a region from the surface to a depth of 2 nm) of the mixed oxide particles of each of EXAMPLES 1 to 4 and COMPARATIVE EXAMPLE 1 was measured with X-ray photoelectron spectroscopy (XPS), thereby obtaining the surface Pt concentration ratio (i.e., the Pt concentration in the surface region/the Pt concentration in the entire particles). Here, the depth of "2nm" was selected in this case because it is known that the depth of characteristic X-rays entering from the surface depends on the intensity of the characteristic X-rays, and because X rays having an intensity of 1000 eV were used in this case. The results are shown in FIG. 5.

The surface Pt concentration ratio of the mixed oxide particles is 2.5 or less for EXAMPLES 1 to 4, but is higher than 2.5 for COMPARATIVE EXAMPLE 1. Specifically, the amount of Pt supported, in an oxide form, on the surface of the mixed oxide particles is smaller in EXAMPLES 1 to 4 than that in COMPARATIVE EXAMPLE 1, and thus a large part of Pt is dissolved in the mixed oxide particles. The surface Pt concentration ratio is preferably less than 2.0, more preferably 1.8 or less, and much more preferably 1.5 or less. The surface Pt concentration ratio is preferably higher than one. These values are selected for the purpose of causing a catalytic metal exposed at the surfaces of the mixed oxide particles to be present as a medium for storing and releasing oxygen, and for the purpose of causing the catalytic metal to contribute to purification of the exhaust gas.

### <Pore Volume, Pore Diameter, Crystallite Diameter, Specific Surface Area of Mixed Oxide Particles>

In addition to the mixed oxide powder of EXAMPLES 1 to 4 and COMPARATIVE EXAMPLE 1, mixed oxide powder of EXAMPLES 5 to 7 and COMPARATIVE EXAMPLES 2 and 3 were prepared, and the pore volumes and other factors thereof were obtained.

### -EXAMPLE 5-

Mixed oxide powder of EXAMPLE 5 was prepared under the same conditions in the same manner as those in EXAMPLE 1 except that the Ce/Pr mole ratio was 7/3. The obtained mixed oxide powder is referred to as "Ethanol Pt-doped Ce/Pr = 7/3" or "Ethanol Pt-doped Ce_{0.7}Pr_{0.3}O₂" in the drawings and tables.

### -EXAMPLE 6-

Mixed oxide powder of EXAMPLE 6 was prepared under the same conditions in the same manner as those in EXAMPLE 1 except that the Ce/Pr mole ratio was 5/5. The obtained mixed oxide powder is referred to as "Ethanol Pt-doped Ce/Pr = 5/5" or "Ethanol Pt-doped Ce_{0.5}Pr_{0.5}O₂" in the drawings and tables.

### -EXAMPLE 7-

Mixed oxide powder of EXAMPLE 7 was prepared under the same conditions in the same manner as those in EXAMPLE 3 (i.e., Pt-P doping) except that the Ce/Pr mole ratio was 5/5. The obtained mixed oxide powder is referred to as "Pt-P-doped Ce/Pr = 5/5" or "Pt-P-doped Ce_{0.5}Pr_{0.5}O₂" in the drawings and tables.

### -COMPARATIVE EXAMPLE 2-

Mixed oxide powder of COMPARATIVE EXAMPLE 2 was prepared under the same conditions in the same manner as those in COMPARATIVE EXAMPLE 1 (i.e., Pt-P dried) except that the Ce/Pr mole ratio was 5/5. The obtained mixed oxide powder is referred to as "Pt-P dried Ce/Pr = 5/5" or "Pt-P dried Ce_{0.5}Pr_{0.5}O₂" in the drawings and tables.

### -COMPARATIVE EXAMPLE 3-

Mixed oxide powder of COMPARATIVE EXAMPLE 3 was prepared under the same conditions in the same manner as those in COMPARATIVE EXAMPLE 1 (i.e., Pt-P dried) except that the Ce/Pr mole ratio was 1/9. The obtained mixed oxide powder is referred to as "Pt-P dried Ce/Pr = 1/9" or "Pt-P dried Ce_{0.1}Pr_{0.9}O₂" in the drawings and tables.

### -Measurement Results on Pore Volume, Pore Diameter, Crystallite Diameter, and Specific Surface Area-

Table 1 shows measurement results on the pore volume, the pore diameter, the crystallite diameter, and the BET specific surface area of the mixed oxide of each of EXAMPLES 1 to 7 and COMPARATIVE EXAMPLES 1 to 3 described above after aging performed in an atmospheric environment at a temperature of 750°C or 1000°C for 24 hours. In Table 1, the "pore diameter" is the average pore diameter, and the "crystallite diameter" is obtained, with an X-ray diffractometer, by Scherrer equation (i.e., crystallite diameter (hkl) = 0.9 λ/(β_{1/2}·cosθ) where hkl are Miller indices, λ is a wavelength (angstrom) of characteristic X-rays, β_{1/2} is a half-power bandwidth (radian) of the (hkl) plane, and θ is the reflection angle of X rays. Since a split phase of Pr₆O₁₁ is produced from the "Ethanol Pt-doped Ce/Pr = 1/9" and "Pt-P dried Ce/Pr = 1/9" after aging performed at 1000°C for 24 hours, the crystallite diameter after the aging is the average value of a parent-phase oxide and the split-phase oxide.

**[Table 1]**

| Sample | 750°C, 24h | | | | 1000°C, 24h |
|---|---|---|---|---|---|
| | pore volume (cm³/g) | pore diameter (nm) | crystallite diameter (nm) | specific surface area (m²/g) | crystallite diameter (nm) |
| Ethanol Pt-doped Ce/Pr=9/1 | 0.24 | 21.2 | 18.5 | 41.2 | 49.6 |
| Pt-P-doped Ce/Pr=9/1 | 0.03 | 6.4 | - | 37.1 | - |
| Pt-P dried Ce/Pr=9/1 | 0.17 | 23.6 | 24.5 | 32.2 | 53.0 |
| Ethanol Pt-doped Ce/Pr=7/3 | 0.19 | 28.0 | 19.3 | 14.0 | 51.5 |
| Ethanol Pt-doped Ce/Pr=5/5 | 0.16 | 32.2 | 22.4 | 11.0 | 58.0 |
| Pt-P-doped Ce/Pr=5/5 | 0.07 | 21.0 | - | 10.3 | - |
| Pt-P dried Ce/Pr=5/5 | 0.11 | 33.9 | 29.7 | - | 60.1 |
| Ethanol Pt-doped Ce/Pr=1/9 | 0.12 | 34.6 | 23.0 | 9.5 | 49.8 |
| Pt-P-doped Ce/Pr=1/9 | 0.10 | 21.6 | - | 16.1 | - |
| Pt-P dried Ce/Pr=1/9 | 0.09 | 36.0 | 30.3 | - | 57.4 |

Except for the case of Ce/Pr = 1/9, the "Ethanol Pt-doped" products basically have large pore volumes relative to the average pore diameter, and also have large BET specific surface areas, unlike the "Pt-P-doped" products and the "Pt-P dried" products. This means that the "Ethanol Pt-doped" products have a large number of pores and a high gas diffusivity, and thus exhibits a large oxygen storage/release capacity. A comparison between the "Pt-P-doped" products and the "Pt-P dried" products shows that the "Pt-P-doped" products have smaller pore volumes and smaller pore diameters than the "Pt-P dried" products, and that the BET specific surface area of the former is larger than that of the latter. Accordingly, the "Pt-P-doped" products are considered to have a larger number of pores, and thus have a higher gas diffusivity and a larger oxygen storage/release capacity, than the "Pt-P dried" products.

The average crystallite diameters obtained by Scherrer equation of the "Ethanol Pt-doped" products are smaller than those of the "Pt-P dried" products. This fact shows that grain growth due to aging is not considerable, i.e., the thermal resistance is high.

Preferably, in a "Ethanol Pt-doped" mixed oxide having a Ce/Pr mole ratio of 1/9 to 9/1, both inclusive, the crystallite diameter obtained by Scherrer equation after 1000°C-24 hour aging is less than 60 nm, the pore volume after 750°C-24 hour aging is 0.12cm³/g or more, or the average pore diameter after 750°C-24 hour aging is less than 35 nm.

### <Oxygen Storage/Release Capacity>

The amounts of stored/released oxygen after aging performed at 750°C for 24 hours in an atmospheric environment was measured for the mixed oxide powder of the EXAMPLES 1 to 3 and 5 to 7 and COMPARATIVE EXAMPLE 1 and "Ethanol Pt-doped CeO₂" powder. The "Ethanol Pt-doped CeO₂" powder was obtained by setting the amount of the Pr source material at zero in the method of EXAMPLE 1. The Pt concentration therein was 0.5% by mass. In measuring the amount of stored/released oxygen, a pretreatment (i.e., an,oxygen storage treatment) was performed in the following manner. First, while a 5% O₂ gas (where the balance was H) was supplied to a 0.10 g of a sample at a flow rate of 100 mL/min, the gas temperature was increased at a rate of 20°C/min. Subsequently, the temperature was kept at 600°C for 20 minutes, and then cooled to room temperature. Thereafter, while a 2% CO gas (where the balance was He) was supplied at a flow rate of 100 mL/min, the gas temperature was increased at a rate of 10°C/min. In this state, it was measured how the amount of CO₂ released from the sample varies with the temperature. This amount of released CO₂ corresponds to the amount of oxygen released from the sample.

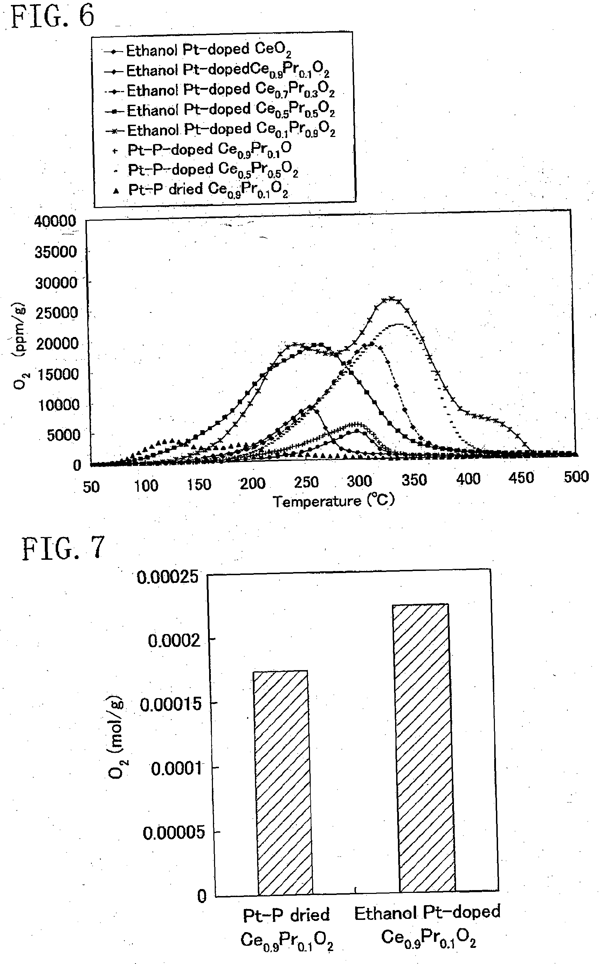

The results are shown in FIG. 6. The Pt-doped mixed oxide powder of each sample exhibits a larger amount of released oxygen than the mixed oxide powder carrying dried Pt. The amount of the oxygen released from the Pt-doped mixed oxide powder is large in a temperature range of 150°C or 200°C or more. A comparison among the samples of the Pt-doped mixed oxide powder shows that the "Ethanol Pt-doped" product having a Ce/Pr of 9/1 (i.e., Ce_{0.9}Pr_{0.1}O₂) exhibits a larger amount of released oxygen and a lower release peak temperature than the "Pt-P-doped" product having a Ce/Pr of 9/1 (i.e., Ce_{0.9}Pr_{0.1}O₂). In addition, the "Ethanol Pt-doped" product having a Ce/Pr of 5/5 (i.e., Ce_{0.5}Pr_{0.5}O₂) also exhibits a larger amount of released oxygen and a lower release peak temperature than the "Pt-P-doped" product having a Ce/Pr of 5/5 (i.e., Ce_{0.5}Pr_{0.5}O₂). Further, the Ethanol Pt-doped products exhibit relatively large amounts of released oxygen in a wide temperature range from a low temperature to a high temperature. This proves that the Pt-doped mixed oxide powder (especially, the "Ethanol Pt-doped" mixed oxide powder) has a high thermal resistance and a large oxygen storage/release capacity, and thus is useful for an exhaust gas purification catalyst. With respect to the "Ethanol Pt-doped Ce_{0.1}Pr_{0.9}O₂," the reason why the released oxygen amount has two peaks at a high temperature and a low temperature, respectively, is because of the influence of a split phase of Pr₆O₁₁.

FIG. 7 shows a comparison of the released oxygen amount between the "Ethanol Pt-doped" product having a Ce/Pr of 9/1 (i.e., Ce_{0.9}Pr_{0.1}O₂) of an example and the "Pt-P dried" product having a Ce/Pr of 9/1 (i.e., Ce_{0.9}Pr_{0.1}O₂) of a comparative example at a temperature of 50°C to 600°C. As shown in FIG. 7, the product of the example exhibits a large amount of released oxygen.

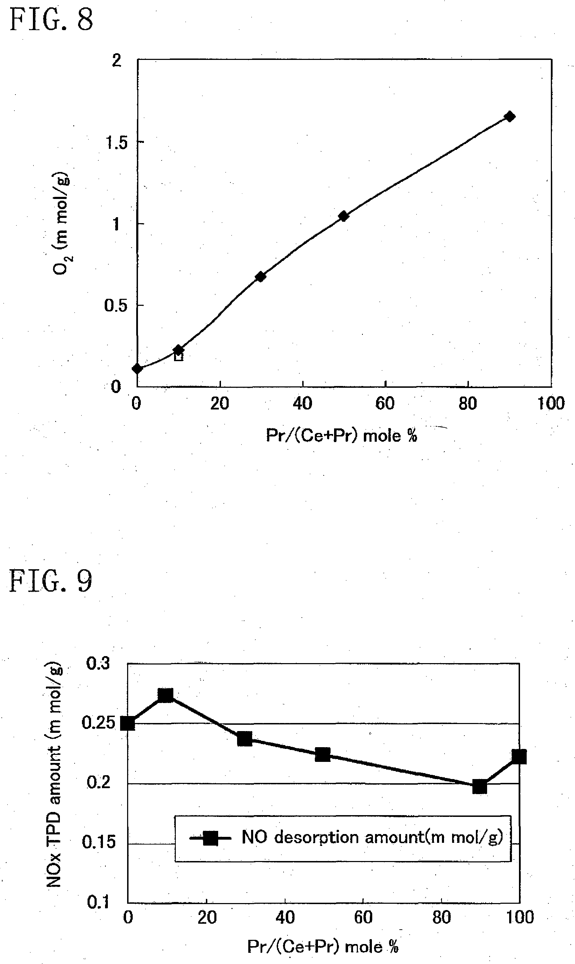

FIG. 8 shows an influence of the Pr/(Ce+Pr) mole percentage on the released oxygen amount (total amount) at a temperature of 50°C to 600°C for an "Ethanol Pt-doped" product, based on the data on EXAMPLES 1, 2, 5, and 6 shown in FIG. 6 and "Ethanol Pt-doped CeO₂." In FIG. 8, the open square indicates a "Pt-P dried Ce_{0.9}Pr_{0.1}O₂" product. As shown in FIG. 8, the released oxygen amount increases as the Pr proportion increases.

### <NOx Adsorption/Desorption Properties of Pt-doped CePr-based Mixed Oxide>

NOx adsorption/desorption properties of mixed oxide powder of each of EXAMPLES 1, 2, 5, and 6, "Ethanol Pt-doped CeO₂," and "Ethanol Pt-doped Pr₆O₁₁" were evaluated with a NO-TPD (temperature programmed desorption) test. The "Ethanol Pt-doped Pr₆O₁₁" powder was prepared with the amount of a Ce source material set at zero in the method of EXAMPLE 1. The Pt concentration was 0.5% by mass.

First, while a reducing gas (where the proportion of H₂ was 0.45%, the balance was H, and the flow rate was 100 mL/min) was supplied to sample powder, the gas temperature was increased from room temperature (i.e., 25°C) at a rate of 30°C/min. Thereafter, the temperature was kept at 600°C for 10 minutes, and then cooled to room temperature. Next, a NO-containing gas (where the amount of NO was 4000 ppm, the proportion of O₂ was 3.0%, the balance was He, and the flow rate was 100 mL/min) was supplied at room temperature for 15 minutes. Subsequently, while a He gas (at a flow rate of 100 mL/min) was supplied, the gas temperature was increased to 600°C at a rate of 20°C/min, thereby causing desorption of NOx from the sample powder and measuring the amount of this desorption.

The results are shown in FIG. 9. FIG. 9 shows that the addition of a small amount of Pr (i.e., 20% or less of the Pr/(Ce+Pr) mole percentage) allows the CePr-based mixed oxide to exhibit more superior NOx adsorption performance. FIG. 9 also shows that the NOx desorption amount tends to decrease as the Pr proportion increases. However, this decrease is not significant, and relatively superior NOx adsorption performance can be obtained even with a large Pr proportion.

### <Relationship between Pt-doping Proportion and NOx Purification Performance in Exhaust Gas Purification Catalyst>

Based on the structure of the exhaust gas purification catalyst shown in FIG. 1, four types of sample catalysts having different Pt doping proportions were prepared. These sample catalysts were obtained by providing Pt-doped CePr mixed oxide (whose composition excluding Pt was Ce_{0.9}Pr_{0.1}O₂) powder and activated alumina powder in the lower catalyst layer 2, by providing Rh-carrying activated alumina powder in the upper catalyst layer 3, and by impregnating these upper and lower catalyst layers 2 and 3 with Pt, Rh, Ba as a NOx storage material, and Sr. In these sample catalysts, Ba and Sr were at least partially supported on the Pt-doped CePr mixed oxide particles.

Regarding the amounts of the carried components per liter of the support, the CePr mixed oxide powder and the activated alumina powder in the lower catalyst layer 2 were each set at 135 g/L, the activated alumina powder in the upper catalyst layer 3 was set at 50 g/L. The amount of carried Pt was adjusted such that the sum of the amount of Pt contained in the CePr mixed oxide and the amount of Pt carried on the catalyst layers 2 and 3 as a result of impregnation was 2.0 g/L. The amount of Rh carried as a result of impregnation was 0.1 g/L, the amount of Ba carried as a result of impregnation was 30 g/L, and the amount of Sr carried as a result of impregnation was 10 g/L. The amount of Rh carried on the upper catalyst layer 3 as Rh-carrying activated alumina powder was 0.4 g/L.

The four types of sample catalysts have different amounts of Pt added to the CePr mixed oxide particles by doping, i.e., 0% by mass, 0.1% by mass, 0.5% by mass, and 1.0% by mass, respectively. Accordingly, the Pt doping proportions (i.e., the Pt-doping amount /(the Pt doping amount+the Pt impregnation carrying amount)) of the four types of sample catalysts are calculated to be 0%, 6.75%, 33.75%, and 67.5%, respectively. The Pt-doped CePr mixed oxide powder was prepared by using a hexahydroxo platinate (IV) ethanolamine solution as a Pt source material, as in EXAMPLE 1.

These sample catalysts were subjected to aging in which these catalysts were held in an atmospheric environment at 750°C for 24 hours. Then, the NOx purification performance was evaluated with a model gas flow reactor and an exhaust gas analyzer. First, a pretreatment gas shown in Table 2 was allowed to flow at 600°C for 10 minutes. Then, a lean model exhaust gas (whose A/F was 22) was allowed to flow for 60 seconds, and the gas composition was switched to a rich model exhaust gas (whose A/F was 14.5), this rich model exhaust gas was allowed to flow for 60 seconds. This cycle of gas flow was repeated several times. Thereafter, the lean NOx purification efficiency for 60 seconds starting from the gas composition switch from rich to lean, and the rich NOx purification efficiency for 60 seconds starting from the gas composition switch from lean to rich, were measured, and the average value thereof was obtained. The compositions of the lean model exhaust gas and the rich model exhaust gas are shown in Table 2 where the space velocity is 35000/h. The three temperatures, i.e., 150°C, 175°C, and 200°C, of the model exhaust gas were selected.

**[Table 2]**

| | Pretreatment | Lean | Rich |
|---|---|---|---|
| O₂ (%) | - | 10 | 0.50 |
| CO₂ (%) | 13.9 | 6 | 6 |
| CO (%) | 0.61 | 0.16 | 1.0 |
| HC (ppmC) | 1710 | 400 | 4000 |
| NO (ppm) | 1000 | 260 | 260 |
| H₂O (%) | 0.2 | 7 | 7 |
| N₂ | Balance | Balance | Balance |

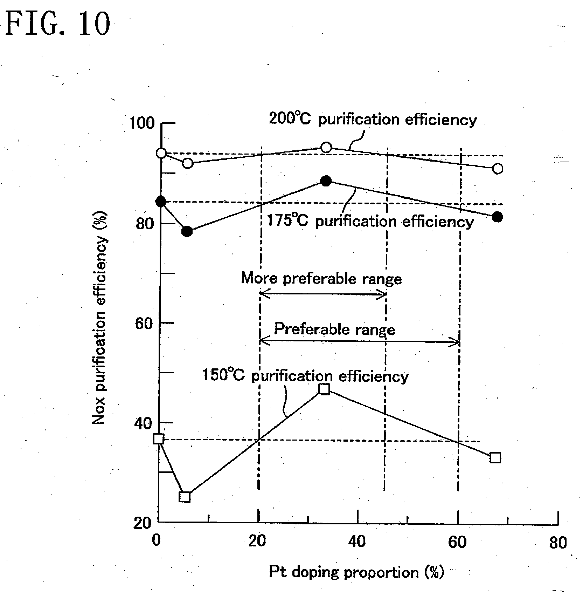

The results are shown in FIG. 10. The NOx purification efficiency is highest when the Pt doping proportion is 33.75% (i.e., the Pt-doping amount is 0.5% by mass). This is considered to be because Pt doping of the CePr mixed oxide particles increases the oxygen storage/release capacity. On the other hand, the NOx purification efficiency when the Pt doping proportion is 6.75% (i.e., the Pt-doping amount is 0.1% by mass) is lower than that when the Pt doping proportion is 0%. This is considered to be because the oxygen storage/release capacity is not significantly increased by the Pt doping when the Pt-doping amount is 0.1% by mass, and the degradation of the NOx purification performance due to a decrease in the amount of Pt carried as a result of impregnation is dominant. When the Pt doping proportion exceeds 33.75%, the NOx purification efficiency decreases. This is considered to be because the degradation of the NOx purification performance due to a decrease in the amount of Pt carried as a result of impregnation becomes dominant.

The results of measurement of the NOx purification efficiency at 150°C show that the Pt doping proportion is preferably in the range from 20% to 60%, both inclusive. The results of measurement of the NOx purification efficiency at 200°C show that the Pt doping proportion is preferably in the range from 20% to 45%, both inclusive.

### <Relationship between Pr Proportion and NOx Purification Performance of CePr Mixed Oxide>

Multiple samples of Pt-doped CePr mixed oxide powder having different Pr/(Ce+Pr) mole percentages were prepared with the Pt-doping amount set at 0.5% by mass, and multiple samples of Pt-carrying CePr mixed oxide powder having different Pr/(Ce+Pr) mole percentages were prepared with the Pt-doping amount set at 0.5% by mass. Each sample of the Pt-doped CePr mixed oxide powder was prepared by coprecipitation with a hexahydroxo platinate (IV) ethanolamine solution used as a Pt source material, as in EXAMPLE 1. Each sample of the Pt-carrying CePr mixed oxide powder was prepared by evaporation to dryness with a dinitrodiammine platinum (II) nitric acid solution used as a Pt source material, as in COMPARATIVE EXAMPLE 1.

In this manner, as in the evaluation of the NOx purification performance described above, sample catalysts were prepared by using the Pt-doped CePr mixed oxide powder and the Pt-carrying CePr mixed oxide powder. These sample catalysts were obtained by providing 50 g/L (where Rh was 0.4 g/L) of the Rh-carrying activated alumina powder in the upper catalyst layer 3, by providing 135 g/L of the Pt-doped CePr mixed oxide powder and 135 g/L of activated alumina powder in the lower catalyst layer 2, and by impregnating these catalyst layers 2 and 3 with 1.325g/L of Pt, 0.1g/L of Rh, 30g/L of Ba, and 10g/L of Sr.

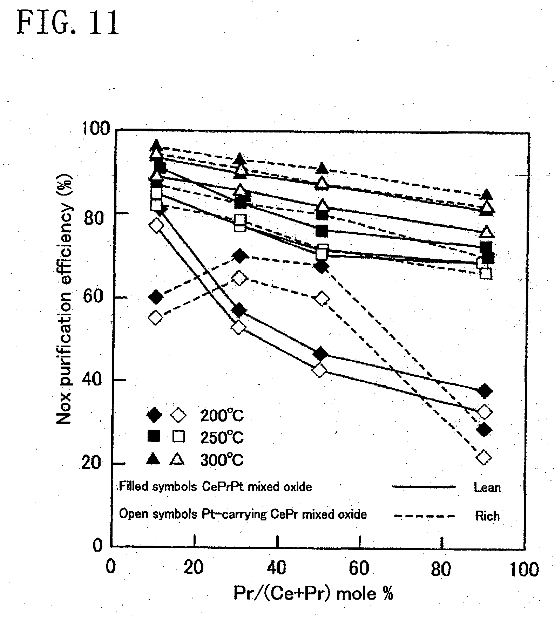

The lean NOx purification efficiency and the rich NOx purification efficiency of each of the sample catalysts were measured at model-exhaust-gas temperatures of 200°C, 250°C, and 300°C, under the same conditions in the same manner as those for the aforementioned evaluation of the NOx purification performance. The results are shown in FIG. 11. In FIG. 11, the "CePrPt mixed oxide" means the sample catalyst using the Pt-doped CePr mixed oxide powder, and the "Pt-carrying CePr mixed oxide" means the sample catalyst using the Pt-carrying CePr mixed oxide powder.

FIG. 11 shows that the NOx purification efficiency is higher in examples (indicated by filled diamonds, squares, and triangles) in which Pt-doped CePr mixed oxide powder was prepared by coprecipitation with a hexahydroxo platinate (IV) ethanolamine solution used as a Pt source material than that in comparative examples (indicated by open diamonds, squares, and triangles) employing evaporation to dryness. Except for the lean NOx purification efficiencies obtained at 200°C (indicated by filled diamonds and open diamonds), all the NOx purification efficiencies decrease as the Pr/(Ce+Pr) mole percentage increases. This matches the tendency of NOx adsorption/desorption properties shown in FIG. 9. Thus, the decrease in the NOx purification efficiency is considered to be because of a decrease in the NOx adsorption amount caused by an increase in the Pr/(Ce+Pr) mole percentage.

The metal components of the mixed oxide of the aforementioned examples are Ce, Pr, and Pt. Other metal components such as Zr may also be mixed in the metal oxide.

## Claims

1. An exhaust gas purification catalyst, comprising a support (1) and a catalytic layer provided on the support (1), wherein the catalytic layer (2) contains:
a NOx storage material which stores NOx in exhaust gas when an air-fuel ratio of the exhaust gas is leaner than a stoichiometric air-fuel ratio, and releases the NOx when the air-fuel ratio is close to the stoichiometric air-fuel ratio or richer than the stoichiometric air-fuel ratio; and
CePr-based mixed oxide particles doped with Pt as a catalytic metal and formed by complexing Ce, Pr and the catalytic metal Pt, wherein
the CePr-based mixed oxide particles contain a Ce oxide and a Pr oxide which are at least partially dissolved in each other, and
Pt is dissolved in the CePr-based mixed oxide particles,
**characterized in that**
the NOx storage material is carried on the CePr-based mixed oxide particles.

2. The exhaust gas purification catalyst of claim 1, wherein in a surface region of the CePr-based mixed oxide particles extending from the surfaces thereof to a depth of 2 nm, the catalytic metal Pt has a concentration which is measured with X-ray photoelectron spectroscopy, and which is equal to or less than 2.5 times as high as an average concentration of the catalytic metal in the entire mixed oxide particles.

3. The exhaust gas purification catalyst of any one of claims 1 or 2, wherein the catalytic layer (2) further carries Pt as a result of impregnation with a Pt solution, in addition to Pt dissolved in the CePr-based mixed oxide particles, and wherein a proportion of the amount of Pt dissolved in the CePr-based mixed oxide particles with respect to a sum of the amount of Pt dissolved in the CePr-based mixed oxide particles and the amount of Pt carried on the catalytic layer (2) as a result of impregnation is in the range from 20% by mass to 60% by mass, both inclusive.

4. The exhaust gas purification catalyst of one of claims 1 to 3, wherein a catalytic layer (3) containing oxide particles carrying Rh is provided on or above the catalytic layer (2) containing the NOx storage material and the CePr-based mixed oxide particles.

5. The exhaust gas purification catalyst of claim 3, wherein the proportion of dissolved Pt is in the range from 20% by mass to 45% by mass, both inclusive.

6. The exhaust gas purification catalyst of claim 4, wherein the CePr-based mixed oxide particles have a Pr/(Ce+Pr) mole percentage of 50% or less.

7. The exhaust gas purification catalyst of one of claims 1 to 6, wherein the part of the catalytic metal Pt dispersed and exposed at the surfaces of the CePr-based mixed oxide particles has a grain diameter of 3 nm or less when observed with an electron microscope after heating performed at 1000°C for 24 hours in an atmospheric environment.

## Patentansprüche

1. Abgasreinigungskatalysator, welcher einen Träger (1) und eine auf dem Träger (1) vorgesehene katalytische Schicht umfasst, wobei die katalytische Schicht (2) enthält:
ein NOx-Speichermaterial, das NOx in Abgas speichert, wenn ein Luft/Kraftstoff-Verhältnis des Abgases magerer als ein stöchiometrisches Luft/Kraftstoff-Verhältnis ist, und das NOx freisetzt, wenn das Luft/Kraftstoff-Verhältnis nahe am stöchiometrischen Luft/Kraftstoff-Verhältnis liegt oder fetter als das stöchiometrische Luft/Kraftstoff-Verhältnis ist; und
CePr-basierte Mischoxidpartikel, die mit Pt als katalytisches Metall dotiert sind und durch Überführen von Ce, Pr und dem katalytischen Metall Pt in einen Komplex gebildet sind, wobei
die CePr-basierten Mischoxidpartikel ein Ce-Oxid und ein Pr-Oxid enthalten, die zumindest teilweise ineinander aufgelöst sind, und
Pt in den CePr-basierten Mischoxidpartikeln aufgelöst ist,
**dadurch gekennzeichnet, dass**
das NOx-Speichermaterial auf den CePr-basierten Mischoxidpartikeln geträgert ist.

2. Abgasreinigungskatalysator nach Anspruch 1, wobei in einem Oberflächenbereich der CePr-basierten Mischoxidpartikel, der sich von Oberflächen derselben auf eine Tiefe von 2 nm erstreckt, das katalytische Metall Pt eine Konzentration aufweist, die mit Röntgen-Photoelektronenspektroskopie gemessen wird und die kleiner oder gleich dem 2,5-fachen einer mittleren Konzentration des katalytischen Metalls in den gesamten Mischoxidpartikeln ist.

3. Abgasreinigungskatalysator nach einem der Ansprüche 1 oder 2, wobei die katalytische Schicht (2) infolge einer Imprägnation mit einer Pt-Lösung zusätzlich zu in den CePr-basierten Mischoxidpartikeln aufgelöstem Pt weiterhin Pt trägert und wobei ein Verhältnis der in den CePr-basierten Mischoxidpartikeln aufgelösten Pt-Menge bezüglich einer Summe der in den CePr-Basierten Mischoxidpartikeln aufgelösten Pt-Menge und der auf der katalytischen Schicht (2) infolge von Imprägnation geträgerten Pt-Menge in dem Bereich von 20 Masseprozent bis 60 Masseprozent, beide Werte eingeschlossen, liegt.

4. Abgasreinigungskatalysator nach einem der Ansprüche 1 bis 3, wobei eine katalytische Schicht (3), die Rh tragende Oxidpartikel enthält, auf oder oberhalb der katalytischen Schicht (2), die das NOx-Speichermaterial und die CePr-basierten Mischoxidpartikel enthält, vorgesehen ist.

5. Abgasreinigungskatalysator nach Anspruch 3, wobei das Verhältnis von aufgelöstem Pr in dem Bereich von 20 Masseprozent bis 45 Masseprozent, beide Werte eingeschlossen, liegt.

6. Abgasreinigungskatalysator nach Anspruch 4, wobei die CePr-basierten Mischoxidpartikel einen Pr/(Ce+Pr)-Molprozentsatz von 50% oder weniger aufweisen.

7. Abgasreinigungskatalysator nach einem der Ansprüche 1 bis 6, wobei der Teil des katalytischen Metalls Pt, der an den Oberflächen der CePr-basierten Mischoxidpartikel dispergiert und freigelegt ist, bei Betrachtung mit einem Elektronenmikroskop nach Ausführen von Erwärmen bei 1000°C über 24 Stunden in einer Atmosphärenumgebung einen Korndurchmesser von 3 nm oder weniger aufweist.

## Revendications

1. Catalyseur de purification des gaz d'échappement, comprenant un support (1) et une couche catalytique prévue sur le support (1), la couche catalytique (2) contenant :
un matériau d'accumulation de NOx qui accumule les NOx des gaz d'échappement quand un rapport air-carburant des gaz d'échappement est plus pauvre qu'un rapport air-carburant stoechiométrique, et libère les NOx quand le rapport air-carburant est proche du rapport air-carburant stoechiométrique ou plus riche que le rapport air-carburant stoechiométrique ; et
des particules d'oxyde mélangé à base de CePr dopées avec du Pt comme métal catalytique et formées en complexant le Ce, le Pr et le métal catalytique Pt, dans lequel
les particules d'oxyde mélangé à base de CePr contiennent un oxyde de Ce et un oxyde de Pr qui sont au moins partiellement dissolus l'un dans l'autre, et
le Pt est dissolu dans les particules d'oxyde mélangé à base de CePr,
**caractérisé en ce que**
le matériau d'accumulation de NOx est porté sur les particules d'oxyde mélangé à base de CePr.

2. Catalyseur de purification des gaz d'échappement selon la revendication 1, dans lequel, dans une zone de surface des particules d'oxyde mélangé à base de CePr s'étendant des surfaces de celles-ci à une profondeur de 2 nm, le métal catalytique Pt présente une concentration qui est mesurée par spectroscopie photoélectronique X, et qui est égale ou inférieure à 2,5 fois une concentration moyenne du métal catalytique dans les particules d'oxyde mélangé entières.

3. Catalyseur de purification des gaz d'échappement selon l'une quelconque des revendications 1 ou 2, dans lequel la couche catalytique (2) porte en outre du Pt résultant d'une imprégnation avec une solution de Pt, en plus du Pt dissolu dans les particules d'oxyde mélangé à base de CePr, et dans lequel une proportion de la quantité de Pt dissolue dans les particules d'oxyde mélangé à base de CePr par rapport à une somme de la quantité de Pt dissolue dans les particules d'oxyde mélangé à base de CePr et de la quantité de Pt portée sur la couche catalytique (2) résultant d'une imprégnation se trouve dans la plage de 20 % en masse à 60 % en masse, ces deux valeurs incluses.

4. Catalyseur de purification des gaz d'échappement selon l'une des revendications 1 à 3, dans lequel une couche catalytique (3) contenant des particules d'oxyde portant du Rh est prévue sur ou au-dessus de la couche catalytique (2) contenant le matériau d'accumulation de NOx et les particules d'oxyde mélangé à base de CePr.

5. Catalyseur de purification des gaz d'échappement selon la revendication 3, dans lequel la proportion de Pt dissolu se situe dans la plage de 20 % en masse à 45 % en masse, ces deux valeurs incluses.

6. Catalyseur de purification des gaz d'échappement selon la revendication 4, dans lequel les particules d'oxyde mélangé à base de CePr présentent un pourcentage molaire de Pr/(Ce+Pr) de 50 % ou moins.

7. Catalyseur de purification des gaz d'échappement selon l'une des revendications 1 à 6, dans lequel la partie du métal catalytique Pt dispersée et exposée sur les surfaces des particules d'oxyde mélangé à base de CePr présente un diamètre du grain de 3 nm ou moins, lorsqu'elle est observée à l'aide d'un microscope électronique après un chauffage effectué à 1000°C pendant 24 heures dans un milieu atmosphérique.
